# EUROPÄISCHE PATENTSCHRIFT

(11) **EP 2 800 930 B1**
(45) Veröffentlichungstag und Bekanntmachung des Hinweises auf die Patenterteilung: **14.11.2018**
(21) Anmeldenummer: 12809751.6
(22) Anmeldetag: 17.12.2012
(51) Int. Cl.: F21V 9/30, G02B 6/00, F21Y 115/10

(54) **LEUCHTSTOFFKÖRPER ZUR KONVERSION VON PUMPLICHT**
LUMINESCENT BODY FOR CONVERTING PUMP LIGHT
ÉLÉMENT LUMINESCENT POUR LA CONVERSION DE LUMIÈRE DE POMPAGE

(30) Priorität: 02.01.2012 DE 102012200011
(43) Veröffentlichungstag der Anmeldung: 12.11.2014
(73) Patentinhaber: OSRAM GmbH, 80807 München (DE)
(72) Erfinder: NAUEN, Andre, 93051 Regensburg (DE)
(86) Internationale Anmeldenummer: PCT/EP2012/075813
(87) Internationale Veröffentlichungsnummer: WO 2013/102553

(56) Entgegenhaltungen:
- WO-A1-2009/126836
- WO-A1-2011/142179
- WO-A2-2006/133214
- US-A1- 2009 196 046

## Beschreibung

### Technisches Gebiet

Die vorliegende Erfindung betrifft eine Beleuchtungseinheit mit einer Mehrzahl Pumplichtquellen und einem Leuchtstoffkörper zur Umwandlung von Pumplicht zu Konversionslicht.

### Stand der Technik

Als Lichtquellen hoher Leuchtdichte sind Gasentladungslampen gegenwärtig noch am weitesten verbreitet. Die jüngsten Entwicklungen hingegen betreffen die Kombination einer Lichtquelle hoher Leistungsdichte, etwa eines Lasers, mit einem Pumplicht konvertierenden Leuchtstoffelement, das zu der Pumplichtquelle beabstandet angeordnet wird. Das beispielsweise blaue oder ultraviolette Pumplicht wird durch das Leuchtstoffelement konvertiert, sodass Konversionslicht längerer Wellenlänge abgegeben wird.

Das Dokument WO 2011/142179 A1 offenbart eine Pumplichtquelle und einen Leuchtstoffkörper, die so angeordnet und ausgelegt sind, dass die Hauptemissionsrichtung der Pumplichtquelle und die Hauptemissionsrichtung des Leuchtstoffkörpers, d.h. das Konversionslicht, eine gemeinsame optische Achse bilden. Dazu ist die Pumplichtquelle direkt vor einer Frontfläche des Leuchtstoffkörpers angeordnet, während das Konversionslicht an einer entgegengesetzten Rückfläche des Leuchtstoffkörpers abgestrahlt wird.

Das Dokument WO 2006/133214 A2 offenbart ein Leuchtstoffrad mit einer Mehrzahl Pumplichtquellen. Das Leuchtstoffrad weist eine Scheibe mit einer Rotationsachse auf. Auf der Oberfläche der Scheibe ist eine dünne Leuchtstoffschicht aufgetragen. Die Mehrzahl Pumplichtquellen und das Leuchtstoffrad sind so angeordnet, dass das Pumplicht auf verschiedene Stellen der Leuchtstoffschicht des rotierenden Leuchtstoffrads einstrahlt.

Der vorliegenden Erfindung liegt das technische Problem zugrunde, eine gegenüber dem Stand der Technik vorteilhafte Beleuchtungseinheit mit Leuchtstoffkörper anzugeben.

### Darstellung der Erfindung

Dieses Problem wird erfindungsgemäß mit einer Beleuchtungseinheit mit einer Mehrzahl Pumplichtquellen und einem Leuchtstoffkörper gelöst, dessen Erstreckung in einer Erstreckungsrichtung größer als in einer dazu senkrechten Richtung ist und der dazu ausgelegt ist, infolge einer Beleuchtung mit Pumplicht Konversionslicht in Erstreckungsrichtung abzugeben; dabei ist der Leuchtstoffkörper aus mindestens zwei Leuchtstoffkörpersubvolumina aufgebaut,
die derart ausgelegt sind, dass sich das von ihnen jeweils emittierte Konversionslicht in den spektralen Eigenschaften unterscheidet; die Leuchtstoffkörpersubvolumina sind in einer senkrecht zur Erstreckungsrichtung orientierten Richtung aufeinanderfolgend angeordnet; dabei ist die Erstreckung des Leuchtstoffkörpers in Erstreckungsrichtung nicht nur größer als in einer dazu senkrechten Richtung sondern als in zwei dazu und zueinander senkrechten Richtungen; die Mehrzahl Pumplichtquellen sind entlang der Erstreckungsrichtung angeordnet oder umlaufend verteilt.

"Aufeinanderfolgend" meint dabei, dass sich in einer senkrecht zur Erstreckungsrichtung orientierten Schnittebene durch mindestens zwei Leuchtstoffkörpersubvolumina eine in dieser Ebene liegende Gerade ziehen lässt. Ist etwa eine Vielzahl Leuchtstoffkörpersubvolumina vorgesehen, können diese beispielsweise auf einer gemeinsame Geraden liegen oder auch jeweils paarweise durch Geraden miteinander verbindbar sein. Die Leuchtstoffkörpersubvolumina grenzen dabei nicht zwingend unmittelbar aneinander, sondern können beispielsweise auch ein Stück weit zueinander beabstandet sein.

Es wird also ein Leuchtstoffkörper vorgesehen, dessen Ausdehnung in Erstreckungsrichtung größer als in einer dazu senkrechten Richtung ist, etwa in dieser Reihenfolge zunehmend bevorzugt mindestens das (1,1), (1,25), (1,75), 2, (2,5)-fache davon beträgt. Die Länge des Leuchtstoffkörpers ist in Erstreckungsrichtung nicht nur länger als in einer dazu senkrechten Richtung, sondern als in zwei zur Erstreckungsrichtung und zueinander senkrechten Richtungen. Besonders bevorzugt gelten die zuvor für eine Richtung genannten Längenverhältnisse auch in Bezug auf diese beiden Richtungen.

Aufgrund der somit länglichen Ausgestaltung des Leuchtstoffkörpers (und damit der Leuchtstoffkörpersubvolumina) können die Mehrzahl gleicher oder unterschiedlicher Pumplichtquellen entlang der Erstreckungsrichtung vorgesehen sein, die Beleuchtung also über eine gewisse Länge erfolgen. Wird ein Leuchtstoffkörpersubvolumen zur Illustration des Prinzips gedanklich in Bereiche unterteilt, die in Erstreckungsrichtung aufeinanderfolgen, breitet sich das von einem ersten Leuchtstoffkörpersubvolumenbereich emittierte Konversionslicht dann in Erstreckungsrichtung durch die weiteren, daran anschließenden Leuchtstoffkörpersubvolumenbereiche aus und wird dabei um das von diesen emittierte Konversionslicht ergänzt. An einer sich beispielsweise schräg zur Erstreckungsrichtung (vorzugsweise senkrecht dazu) erstreckenden Abstrahlfläche kann dann also Konversionslicht austreten, das gewissermaßen in Erstreckungsrichtung über die Länge des Leuchtstoffkörpersubvolumens "aufgesammelt" wurde und so etwa einen erhöhten Lichtstrom hat; entsprechend erhöht ist auch die Leuchtdichte.

Der Leuchtstoffkörper kann beispielsweise außenseitig entlang der Erstreckungsrichtung verspiegelt sein; gleichermaßen kann etwa auch ein Leuchtstoffkörpersubvolumen verspiegelt sein, vorzugsweise umlaufend, sodass beispielsweise im Falle aneinandergesetzter Leuchtstoffkörpersubvolumina auch innerhalb des Leuchtstoffkörpersubvolumens eine Verspiegelung vorgesehen sein kann, etwa um einer Lichtmischung zwischen den Leuchtstoffkörpersubvolumina vorzubeugen. Ist der Leuchtstoffköper hingegen etwa nur an seiner Außenfläche verspiegelt, kann beispielsweise auch schon im Leuchtstoffkörper eine Lichtmischung erfolgen. In beiden Fällen kann die Verspiegelung etwa auch zumindest bereichsweise dichroitisch sein, um zum einen eine Pumplichteinkopplung zu ermöglichen und um zum anderen einem seitlichen Austritt von Konversionslicht vorzubeugen und so die seitlichen Abstrahlungsverluste des in Richtung der Abstrahlfläche geleiteten Lichts zu reduzieren.

Es kann jedoch beispielsweise auch allein mit dem sich in Erstreckungsrichtung (beziehungsweise unter einem kleinen Winkel dazu) ausbreitenden Konversionslicht eine Lichtquelle hoher Leuchtdichte realisiert werden, weil in diesem Fall der von einem austretenden Strahl eingenommene Raumwinkel und damit auch das Etendue (projizierter Raumwinkel je Flächenelement; siehe beispielsweise "Field Guide to Illumination", Angelo V. Arecchi et al, SPIE Press 2007) des Lichts klein ist. Entsprechend groß ist die Leuchtdichte, also der Lichtstrom je Etendue.

Sofern keine Verspiegelung entlang der Erstreckungsrichtung vorgesehen ist, wird üblicherweise ein Teil des konvertierten Lichts an der Außenfläche des Leuchtstoffkörpers totalreflektiert (TIR = Total Internal Reflection), etwa wenn der Leuchtstoffkörper von einem Gas wie beispielsweise Luft umgeben ist. Es wird dann also Licht innerhalb eines gewissen, durch die Brechungsindizes von Leuchtstoffkörper und umgebendem Medium vorgegebenen Winkelbereichs in Richtung der Abstrahlfläche geleitet. Das Vorhandensein einer "Abstrahlfläche" impliziert im Allgemeinen also nicht notwendigerweise, dass allein an dieser konvertiertes Licht austritt. Generell kann zur Erhöhung der in Richtung der Abstrahlfläche geleiteten Lichtmenge auch eine der Abstrahlfläche entgegengesetzte, vorzugsweise dazu parallele Außenfläche des Leuchtstoffkörpers verspiegelt sein.

Ein erfindungsgemäßer Leuchtstoffkörper ist aus mindestens zwei Leuchtstoffkörpersubvolumina aufgebaut, deren Konversionslicht sich in seinen spektralen Eigenschaften unterscheidet. Es kann sich also beispielsweise eine Leuchtstoffmischung der Leuchtstoffkörpersubvolumina in einem Bestandteil, also etwa in einem Leuchtstofftyp, unterscheiden. Die Leuchtstoffkörpersubvolumina können beispielsweise zur Emission verschiedener Farben ausgelegt sein, also etwa Licht mit im Wesentlichen zueinander komplementären Spektren emittieren. Andererseits kann beispielsweise auch eine schmalbandige Emission des einen Leuchtstoffkörpersubvolumens ein breitbandiges Spektrum eines anderen spektral überlagern und somit in bestimmten Wellenlängenbereichen ergänzen.

Die Leuchtstoffkörpersubvolumina sind nun in einer senkrecht zur Erstreckungsrichtung orientierten Richtung aufeinanderfolgend angeordnet, also "nebeneinander" und nicht in Erstreckungsrichtung "hintereinander". Diese Anordnung hat sich als besonders vorteilhaft erwiesen, weil so beispielsweise einer Reabsorption des Konversionslichts eines Leuchtstoffkörpersubvolumens durch den in einem anderen Leuchtstoffkörpersubvolumen vorgesehenen Leuchtstoff vorgebeugt werden kann; bei in Erstreckungsrichtung "hintereinander" angeordneten Leuchtstoffkörpersubvolumina könnte nämlich eine solche Strahlungsreabsorption auftreten.

Vorzugsweise erstreckt sich ein Leuchtstoffkörpersubvolumen in Erstreckungsrichtung also über die gesamte Länge des Leuchtstoffkörpers. Der Leuchtstoffkörper ist also besonders bevorzugt ausschließlich aus "nebeneinander" angeordneten Leuchtstoffkörpersubvolumina aufgebaut, was hinsichtlich der Vermeidung einer unerwünschten Wechselwirkung von Konversionslicht und Leuchtstoff verschiedener Leuchtstoffkörpersubvolumina besonders vorteilhaft ist.

Eine solche Wechselwirkung kann in bevorzugter Ausgestaltung weiter unterbunden werden, wenn ein Leuchtstoffkörpersubvolumen über mindestens 20 %, in dieser Reihenfolge zunehmend bevorzugt mindestens 40 %, 60 %, 80 %, seiner in Erstreckungsrichtung genommenen Länge verspiegelt ist; besonders bevorzugt ist es über seine gesamte Länge verspiegelt. Vorzugweise ist das Leuchtstoffkörpersubvolumen zu einem anderen Leuchtstoffkörpersubvolumen hin verspiegelt, die Verspiegelung also dann (auch) innerhalb des Leuchtstoffkörpers angeordnet; besonders bevorzugt ist die Verspiegelung des Leuchtstoffkörpersubvolumens umlaufend vorgesehen, also dann gegebenenfalls außenseitig und innerhalb des Leuchtstoffkörpers angeordnet.

Weiter bevorzugt ist die Verspiegelung zumindest bereichsweise dichroitisch, sodass etwa Pumplicht transmittiert, konvertiertes Licht oder Licht eines anderen Subvolumens jedoch reflektiert wird.

Als Leuchtstoffkörper kann beispielsweise eine Leuchtstoffeinbettungsmatrix vorgesehen sein, in welcher die Leuchtstoffpartikel idealerweise fein gelöst verteilt sind; es kann sich beispielsweise um einen Keramikkörper handeln, etwa dotiertes Yttrium-Aluminium-Granat (YAG). So ergibt beispielsweise mit Eu-dotiertes YAG einen roten und mit Ce-dotiertes YAG einen grünen Leuchtstoff; als blauer Leuchtstoff kann beispielsweise Eu-dotiertes Barium-Magnesium-Aluminat (BAM) vorgesehen sein.

Generell ist der Leuchtstoffkörper nicht notwendigerweise einstückig, sondern können die Leuchtstoffkörpersubvolumina beispielsweise auch als getrennt voneinander hergestellte Teile aneinandergesetzt und vorzugsweise in ihrer Relativposition zueinander festgelegt sein, etwa durch eine Fügeverbindung. In bevorzugter Ausgestaltung können die Leuchtstoffkörpersubvolumina also beispielsweise aneinandergeklebt sein.

Weitere bevorzugte Ausgestaltungen finden sich in den übrigen abhängigen Ansprüchen und in der nachstehenden Beschreibung, wobei wie in der gesamten Offenbarung nicht im Einzelnen zwischen der Beschreibung eines Leuchtstoffkörpers und einer Beleuchtungseinheit mit einem solchen unterschieden wird; ferner richtet sich die Erfindung auch auf Verwendungsaspekte und sollen die einzelnen Merkmale auch in den jeweils anderen Erfindungskategorien offenbart sein.

In bevorzugter Ausgestaltung sind die Leuchtstoffkörpersubvolumina nicht nur aufeinanderfolgend, sondern umlaufend angeordnet, und zwar um eine gemeinsame, in Erstreckungsrichtung orientierte Achse. Diese liegt in einer senkrecht zur Erstreckungsrichtung orientierten Schnittebene betrachtet vorzugsweise innerhalb des Leuchtstoffkörpers; ist der Leuchtstoffkörper in dieser Schnittebene betrachtet durchgehend ausgebildet, schließt er dabei möglicher Weise einen "Hohlraum" ein, der die Achse enthalten kann.

Ein Leuchtstoffkörper mit umlaufend angeordneten Leuchtstoffkörpersubvolumina kann weiter bevorzugt im Betrieb um eine entlang der Erstreckungsrichtung (vorzugsweise parallel dazu) orientierte Rotationsachse rotieren, wobei infolge der Rotation verschiedene Seiten des Leuchtstoffkörpers mit Pumplicht beleuchtet werden. Es kann dann also beispielsweise auch eine Mehrzahl ortsfester Pumplichtquellen infolge der Rotation verschiedene Leuchtstoffkörpersubvolumina beleuchten und so eine Lichtmischung beispielsweise im zeitlichen Mittel erfolgen.

Die Mehrzahl Pumplichtquellen muss dabei nicht zwingend kontinuierlich betrieben werden, sondern das Pumplicht kann beispielweise auch eine variierende Intensität haben, sodass etwa in Anpassung an die Rotationsgeschwindigkeit unterschiedliche Leuchtstoffkörpersubvolumina mit unterschiedlicher Intensität beleuchtet werden.

Generell kann das Konversionslicht für eine weitere Anwendung beispielsweise von der gesamten Abstrahlfläche, die sich als Summe der Abstrahlflächen der einzelnen Leuchtstoffkörpersubvolumina ergibt, abgegriffen und etwa in einer nichtabbildenden Optik durchmischt werden, beispielsweise in einem "Compound Parabolic Concentrator" (CPC). Andererseits kann das Konversionslicht jedoch auch nur von einem Teilbereich der Abstrahlfläche abgegriffen werden, etwa im Falle eines rotierenden Leuchtstoffkörpers, sodass eine Lichtmischung im zeitlichen Mittel erfolgt. Auf diese Weise kann beispielsweise die Beleuchtungseinheit eines Projektionsgeräts betrieben werden, deren Licht dann über ein mit der Rotation getaktetes Mikrospiegelarray selektiert in eine Bildebene geleitet werden kann.

Der Vorteil einer Beleuchtung entlang der Erstreckungsrichtung besteht darin, dass die je (gedachtem) Leuchtstoffkörperbereich eingekoppelte Pumplichtmenge über die Länge in Erstreckungsrichtung hoch gehalten werden kann, und zwar auch im Falle einer aufgrund der Absorption begrenzten Eindringtiefe des Pumplichts.

Die Mehrzahl Pumplichtquellen ist etwa eine Mehrzahl Leuchtdiode(n) und / oder Laserdiode(n), also auch eine beliebige Kombination davon. Besonders bevorzugt sind jedoch Laser-Pumplichtquellen. "Pumplicht" bezieht sich im Rahmen dieser Offenbarung also zunächst auf elektromagnetische Strahlung, deren Wellenlänge auch jenseits des sichtbaren Bereichs liegen kann, etwa im Ultravioletten oder im Infraroten. Dementsprechend allgemein ist generell auch "Beleuchtung" zu verstehen, nämlich als "Bestrahlung". "Pumplicht" kann sogar auch Korpuskularstrahlung umfassen, etwa Elektronen- oder Ionenstrahlung; bevorzugt ist jedoch eine Beleuchtung mit einer Mehrzahl LED oder Laser.

Sofern im Rahmen dieser Offenbarung auf die Ausbreitung von Licht Bezug genommen wird, muss zur Realisierung des Gegenstandes nicht notwendigerweise auch eine Lichtausbreitung erfolgen, sondern soll der Leuchtstoffkörper beziehungsweise die Beleuchtungseinheit lediglich für eine entsprechende Ausbreitung ausgelegt sein.

Wie bereits eingangs erwähnt, richtet sich die Erfindung auf eine Beleuchtungseinheit mit einer Mehrzahl Pumplichtquellen; diese müssen nicht zwingend entlang der Erstreckungsrichtung angeordnet sein, sondern können (unabhängig davon oder zusätzlich) auch umlaufend verteilt sein. Unterschiedliche Leuchtstoffkörpersubvolumina können dann mit unterschiedlichen Pumplichtquellen beleuchtet werden, und zwar in Kombination mit oder unabhängig von einer Rotation.

Die Erfindung betrifft auch die Verwendung einer der vorstehend beschriebenen Beleuchtungseinheiten für ein Projektionsgerät oder Endoskop, zu Raumbeleuchtungszwecken oder auch für industrielle beziehungsweise medizinische Anwendungen im Allgemeinen.

### Kurze Beschreibung der Zeichnungen

Im Folgenden wird die Erfindung anhand von Ausführungsbeispielen näher erläutert, wobei die einzelnen Merkmale auch in anderer Kombination erfindungswesentlich sein können.

Im Einzelnen zeigt
Fig. 1 einen Leuchtstoffkörper;
Fig. 2 eine erfindungsgemäße Beleuchtungseinheit;
Fig. 3 verschiedene Leuchtstoffkörpersubvolumina-Kombinationen.

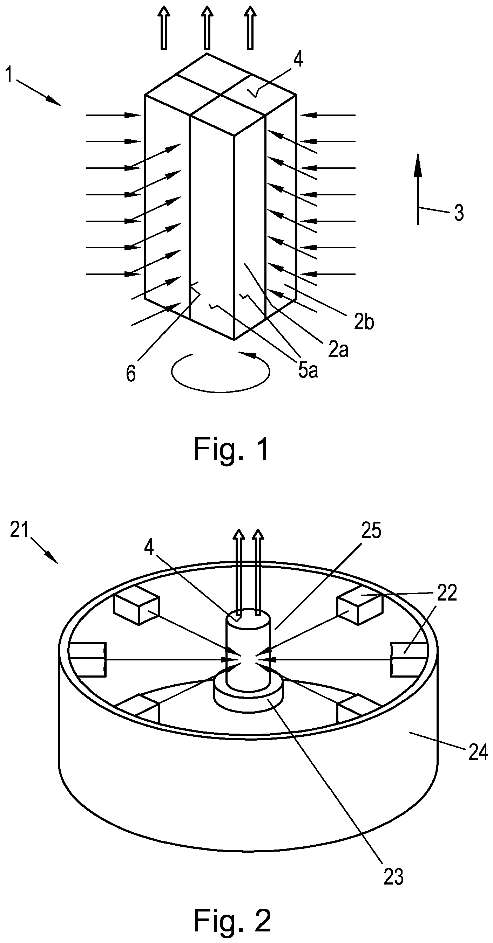

Figur 1 zeigt einen Leuchtstoffkörper 1, der aus mehreren Leuchtstoffkörpersubvolumina 2a,b,c,d zusammengesetzt ist (der Übersichtlichkeit halber sind nur 2a und 2b in der Figur referenziert; dies gilt auch für die im Folgenden beschriebenen Komponenten, ohne dass dies jeweils im Einzelnen klargestellt wird). Die Leuchtstoffkörpersubvolumina 2a,b,c,d erstrecken sich in Erstreckungsrichtung 3 über die gesamte Länge des Leuchtstoffkörpers 1 bis zu einer Abstrahlfläche 4 (diese ergibt sich als Summe der Abstrahlflächen der einzelnen Leuchtstoffkörpersubvolumina 2a,b,c,d) und werden an seitlichen Einstrahlflächen 5a,b,c,d entlang der Erstreckungsrichtung 3 mit Pumplicht beleuchtet. In Erstreckungsrichtung 3 (wenngleich nicht allein in dieser Richtung) breitet sich dann Konversionslicht aus, dessen Intensität in Erstreckungsrichtung 3 zunimmt und welches an der Abstrahlfläche 4a,b,c,d austritt (nicht ausgefüllte Pfeile).

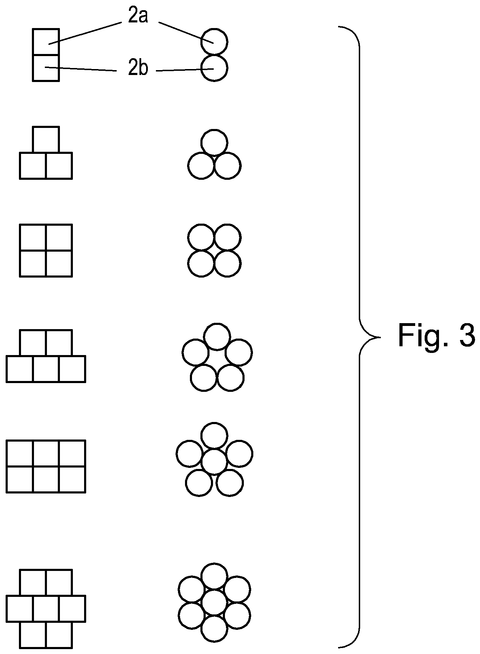

Der Leuchtstoffkörper 1 kann beispielsweise, wie anhand von Figur 2 im Detail gezeigt, mit umlaufend vorgesehenen Pumplichtquellen beleuchtet werden. Der Leuchtstoffkörper 1 kann jedoch auch um eine zur Erstreckungsrichtung 3 parallele Achse rotierbar gelagert sein und dann beispielsweise auch von nur einer Seite beleuchtet werden. Eine Rotation des Leuchtstoffkörpers 1 ist jedoch auch in Verbindung mit umlaufend angeordneten Pumplichtquellen möglich (vgl. Figur 1) und kann beispielsweise hinsichtlich einer Kühlung des Leuchtstoffkörpers 1 vorteilhaft sein. Vorliegend sind vier getrennt voneinander hergestellte und dann über Klebeverbindungen 6 miteinander verbundene Leuchtstoffkörpersubvolumina 2a,b,c,d, dargestellt, die beispielsweise zur Emission von rotem, grünem und blauem Konversionslicht ausgelegt sein können, ergänzt um beispielsweise ein weißes oder gelbes Licht emittierendes Leuchtstoffkörpersubvolumen (ersteres kann beispielsweise die Lichtausbeute erhöhen, letzteres etwa hinsichtlich des Farbraums vorteilhaft sein). Bezüglich weiterer Leuchtstoffkörpersubvolumina-Kombinationen wird auf Figur 3 verwiesen.

Figur 2 zeigt eine Beleuchtungseinheit 21 mit einem Leuchtstoffkörper 1, um den umlaufend Laserdioden 22 als Pumplichtquellen vorgesehen sind (die Leuchtstoffkörpersubvolumina sind der Übersichtlichkeit halber nicht gezeichnet). Der Leuchtstoffkörper 1 ist auf einem Kühlkörper 23 montiert, der gleichzeitig einen der Abstrahlfläche 4 des Leuchtstoffkörpers 1 entgegengesetzten Spiegel darstellt und sich in der Figur nach unten ausbreitendes Konversionslicht in Richtung der Abstrahlfläche 4 reflektiert.

Auch die Laserdioden 22 sind ihrerseits auf einem Kühlkörper 24 montiert; vorliegend ist ein gemeinsamer Kühlring 24 gezeigt, jedoch können auch einzelne Kühlkörper vorgesehen sein. Zur Wärmeabfuhr kann die gesamte Anordnung beispielsweise mit Kühlluft umströmt werden. Hierin besteht ein besonderer Vorteil der zu dem Leuchtstoffkörper 1 beabstandet angeordneten Laserdioden 22 im Vergleich zu beispielsweise direkt auf der Oberfläche des Leuchtstoffkörpers 1 vorgesehenen Leuchtdioden.

Die zu der Abstrahlfläche 4 senkrechten Außenflächen des Leuchtstoffkörpers 1, also die Einstrahlflächen, sind mit einer dichroitischen Schicht 25 versehen, welche für Pumplicht transmissiv, für Konversionslicht jedoch reflektiv ist.

Figur 3 zeigt eine Reihe an Kombinationsmöglichkeiten verschiedener stabförmiger Leuchtstoffkörpersubvolumina 2a, b. Die Stäbe sind quaderförmig (in der Figur links) oder zylinderförmig (in der Figur rechts) ausgestaltet.

Mit zwei Stäben kann beispielsweise ein rotes Konversionslicht emittierender Leuchtstoff mit einem breitbandig grünes Konversionslicht emittierenden Leuchtstoff kombiniert werden, was ein warm-weißes, angenehm empfundenes Licht ergibt. Die Kombination dreier Stäbe bietet sich insbesondere zur Mischung von rotem, grünem und blauem Licht an (RGB). Im Falle eines vierten Stabes kann RGB beispielsweise durch weißes oder gelbes Licht ergänzt werden; andererseits kann beispielsweise auch für eine der drei Farben (RGB) ein zweiter Stab vorgesehen werden, etwa um einen Leuchtstoff geringerer Effizienz gezielt zu ergänzen. Dies gilt selbstverständlich auch für fünf Stäbe beziehungsweise jede beliebige Anzahl an Stäben.

Im Falle von sechs Stäben können also beispielsweise je Farbe (RGB) jeweils zwei Stäbe vorgesehen sein; andererseits kann der RGB-Farbraum auch gezielt ergänzt werden, etwa durch eine Kombination von gelbem, cyan- und magentafarbenem Leuchtstoff (YCM). Selbstverständlich kann bei einer Anordnung mit zwei Stäben je Grundfarbe (RGB) auch zusätzlich ein weißer Leuchtstoffstab zur Optimierung der Helligkeit und / oder ein hinsichtlich des Farbraums vorteilhafter gelber Leuchtstoff vorgesehen sein.

## Patentansprüche

1. Beleuchtungseinheit (21) mit einer Mehrzahl Pumplichtquellen (22) und einem Leuchtstoffkörper (1) zur Umwandlung von Pumplicht zu Konversionslicht,
dessen Erstreckung in einer Erstreckungsrichtung (3) größer als in einer dazu senkrechten Richtung ist und der dazu ausgelegt ist, infolge einer Beleuchtung mit Pumplicht Konversionslicht in Erstreckungsrichtung (3) abzugeben,
wobei der Leuchtstoffkörper (1) aus mindestens zwei Leuchtstoffkörpersubvolumina (2a,b,c,d) aufgebaut ist, die derart ausgelegt sind, dass sich das von ihnen jeweils emittierte Konversionslicht in den spektralen Eigenschaften unterscheidet,
welche Leuchtstoffkörpersubvolumina in einer senkrecht zur Erstreckungsrichtung orientierten Richtung aufeinanderfolgend angeordnet sind,
wobei die Erstreckung des Leuchtstoffkörpers (1) in Erstreckungsrichtung (3) größer als in zwei dazu und zueinander senkrechten Richtungen ist,
**dadurch gekennzeichnet, dass**
die Mehrzahl Pumplichtquellen entlang der Erstreckungsrichtung angeordnet sind oder umlaufend verteilt sind.

2. Beleuchtungseinheit (21) nach Anspruch 1, bei welchem die Leuchtstoffkörpersubvolumina (2a,b,c,d) umlaufend angeordnet sind, und zwar um eine gemeinsame, in Erstreckungsrichtung (3) orientierte Achse.

3. Beleuchtungseinheit (21) nach einem der vorstehenden Ansprüche, bei welchem sich ein Leuchtstoffkörpersubvolumen (2a,b,c,d) in Erstreckungsrichtung (3) über die gesamte Länge des Leuchtstoffkörpers (1) erstreckt.

4. Beleuchtungseinheit (21) nach einem der vorstehenden Ansprüche, bei welchem die Leuchtstoffkörpersubvolumina (2a,b,c,d) als einzelne, vorzugsweise getrennt voneinander hergestellte Teile aneinandergesetzt und vorzugsweise mit einer Fügeverbindung (6) verbunden sind.

5. Beleuchtungseinheit (21) nach Anspruch 4, bei welchem ein Leuchtstoffkörpersubvolumen (2a,b,c,d) über mindestens 20 % seiner in Erstreckungsrichtung (3) genommenen Länge verspiegelt ist, vorzugsweise zu einem anderen Leuchtstoffkörpersubvolumen (2a,b,c,d) hin, besonders bevorzugt umlaufend.

6. Beleuchtungseinheit (21) nach Anspruch 5, bei welchem die Verspiegelung des Leuchtstoffkörpers (1) zumindest bereichsweise dichroitisch ist.

7. Beleuchtungseinheit (21) nach einem der vorstehenden Ansprüche, wobei die Mehrzahl Pumplichtquellen (22)als Laser-Pumplichtquellen (22) ausgebildet ist.

8. Beleuchtungseinheit (21) nach Anspruch 7, bei dem die Mehrzahl Pumplichtquellen (22) solchermaßen umlaufend verteilt angeordnet ist, dass unterschiedliche Leuchtstoffkörpersubvolumina (2a,b,c,d) mit unterschiedlichen Pumplichtquellen (22) beleuchtet werden können.

9. Beleuchtungseinheit (21) nach Anspruch 7 oder 8, bei welcher der Leuchtstoffkörper (1) dazu ausgelegt ist, um eine entlang der Erstreckungsrichtung (3) orientierte Rotationsachse zu rotieren, wobei infolge der Rotation verschiedene Seiten des Leuchtstoffkörpers (1) und damit verschiedene Leuchtstoffkörpersubvolumina (2a,b,c,d) mit Pumplicht beleuchtet werden können.

10. Verwendung einer Beleuchtungseinheit (21) nach einem der vorstehenden Ansprüche für zumindest eines von einem Projektionsgerät, einem Endoskop, Raumbeleuchtungszwecke, industrielle und medizinische Anwendungen.

## Claims

1. Illumination unit (21) comprising a plurality of pump light sources (22) and a phosphor body (1) for converting pump light into converted light,
the extent of said phosphor body being greater in a direction of extent (3) than in a direction perpendicular thereto, and which phosphor body is designed to emit converted light in the direction of extent (3) as a result of illumination with pump light,
wherein the phosphor body (1) is constructed from at least two phosphor body subvolumes (2a,b,c,d), which are designed in such a way that the converted light emitted in each case by said phosphor body subvolumes differs in terms of the spectral properties,
which phosphor body subvolumes are arranged successively in a direction oriented perpendicular to the direction of extent,
wherein the extent of the phosphor body (1) in the direction of extent (3) is greater than in two directions perpendicular thereto and to one another,
**characterized in that**
the plurality of pump light sources are arranged along the direction of extent or are distributed circumferentially.

2. Illumination unit (21) according to Claim 1, in which the phosphor body subvolumes (2a,b,c,d) are arranged circumferentially, to be precise about a common axis oriented in the direction of extent (3).

3. Illumination unit (21) according to either of the preceding claims, in which a phosphor body subvolume (2a,b,c,d) extends in the direction of extent (3) over the entire length of the phosphor body (1).

4. Illumination unit (21) according to one of the preceding claims, in which the phosphor body subvolumes (2a,b,c,d) are put together as individual parts which are preferably produced separately from one another, and are preferably connected by a joint (6).

5. Illumination unit (21) according to Claim 4, in which a phosphor body subvolume (2a,b,c,d) is metal-coated over at least 20% of its length, taken in the direction of extent (3), preferably towards another phosphor body subvolume (2a,b,c,d), particularly preferably circumferentially.

6. Illumination unit (21) according to Claim 5, in which the metal coating of the phosphor body (1) is at least regionally dichroitic.

7. Illumination unit (21) according to one of the preceding claims, wherein the plurality of pump light sources (22)is formed as laser pump light sources (22).

8. Illumination unit (21) according to Claim 7, in which the plurality of pump light sources (22) is arranged distributed circumferentially in such a way that different phosphor body subvolumes (2a,b,c,d) can be illuminated with different pump light sources (22).

9. Illumination unit (21) according to Claim 7 or 8, in which the phosphor body (1) is designed to rotate about an axis of rotation oriented along the direction of extent (3), wherein, as a result of the rotation, different sides of the phosphor body (1) and therefore different phosphor body subvolumes (2a,b,c,d) can be illuminated with pump light.

10. Use of an illumination unit (21) according to one of the preceding claims for at least one of the following: a projection device, an endoscope, interior lighting applications, industrial and medical applications.

## Revendications

1. Unité d'éclairage (21) comportant une pluralité de sources de lumière de pompage (22) et un corps luminescent (1) pour convertir de la lumière de pompage en lumière de conversion, dont l'extension dans une direction d'extension (3) est plus grande que dans une direction qui y est perpendiculaire et qui est conçu pour émettre de la lumière de conversion dans la direction d'extension (3) du fait d'une illumination par de la lumière de pompage,
le corps luminescent (1) étant composé d'au moins deux sous-volumes luminescents (2a,b,c,d) qui sont conçus de telle sorte que la lumière de conversion émise par chacun d'eux diffère par les caractéristiques spectrales,
lesdits sous-volumes luminescents étant agencés successivement dans une direction perpendiculaire à la direction d'extension,
l'extension du corps luminescent (1) étant plus grande dans la direction d'extension (3) que dans deux directions qui y sont perpendiculaires et sont perpendiculaires entre elles,
**caractérisée en ce que**
la pluralité de sources de lumière de pompage est agencée le long de la direction d'extension ou répartie périphériquement.

2. Unité d'éclairage (21) selon la revendication 1, dans laquelle les sous-volumes luminescents (2a,b,c,d) sont agencés périphériquement, à savoir autour d'un axe commun orienté dans la direction d'extension (3).

3. Unité d'éclairage (21) selon l'une des revendications précédentes, dans laquelle un sous-volume luminescent (2a,b,c,d) s'étend sur toute la longueur du corps luminescent (1) dans la direction d'extension (3).

4. Unité d'éclairage (21) selon l'une des revendications précédentes, dans laquelle les sous-volumes luminescents (2a,b,c,d) sont juxtaposés en tant que pièces individuelles, de préférence fabriquées séparément les unes des autres, et sont préférentiellement reliés au moyen d'une liaison de jonction (6).

5. Unité d'éclairage (21) selon la revendication 4, dans laquelle un sous-volume luminescent (2a,b,c,d) est réfléchissante sur au moins 20 % de sa longueur considérée dans la direction d'extension (3), préférentiellement en direction d'un autre sous-volume luminescent (2a,b,c,d), de manière particulièrement préférentielle périphériquement.

6. Unité d'éclairage (21) selon la revendication 5, dans laquelle la surface réfléchissante du corps luminescent (1) est au moins en partie dichroïque.

7. Unité d'éclairage (21) selon l'une des revendications précédentes, la pluralité de sources de lumière de pompage (22) étant réalisée en tant que sources de lumière laser de pompage (22).

8. Unité d'éclairage (21) selon la revendication 7, dans laquelle la pluralité de sources de lumière de pompage (22) est agencée de manière répartie périphériquement de telle sorte que différents sous-volumes luminescents (2a,b,c,d) peuvent être éclairés par différentes sources de lumière de pompage (22).

9. Unité d'éclairage (21) selon la revendication 7 ou 8, dans laquelle le corps luminescent (1) est conçu pour tourner autour d'un axe de rotation qui longe la direction d'extension (3), différents côtés du corps luminescent (1) et, de ce fait, différents sous-volumes luminescents (2a,b,c,d) pouvant être éclairés par de la lumière de pompage en raison de la rotation.

10. Utilisation d'une unité d'éclairage (21) selon l'une des revendications précédentes pour au moins un projecteur, un endoscope, à des fins d'éclairage d'une pièce, pour des applications industrielles et médicales.
